Europäisches Patentamt

European Patent Office

Office européen des brevets

(11) Veröffentlichungsnummer: **0 304 109**
**A2**

## (12) EUROPÄISCHE PATENTANMELDUNG

(21) Anmeldenummer: 88201638.9

(22) Anmeldetag: 29.07.88

(51) Int. Cl.⁴: **F16C 33/08**

(30) Priorität: 18.08.87 DE 3727468

(43) Veröffentlichungstag der Anmeldung:
22.02.89 Patentblatt 89/08

(84) Benannte Vertragsstaaten:
AT DE ES FR GB IT SE

(71) Anmelder: KOLBENSCHMIDT
Aktiengesellschaft
Christian-Schmidt-Strasse 8/12 Postfach
1351
D-7107 Neckarsulm(DE)

(72) Erfinder: Baureis, Hans-Paul
Höhenweg 5
D-6909 Dielheim-Horrenberg(DE)
Erfinder: Bickle, Wolfgang
Friedensstrasse 15
D-6831 Reilingen(DE)
Erfinder: Lankreijer, Wilhelm
Marchinistrasse 8
D-7520 Bruchsal(DE)

(74) Vertreter: Rieger, Harald, Dr.
Reuterweg 14
D-6000 Frankfurt a.M.(DE)

(54) Verbundgleitlager.

(57) Bei einem Verbundgleitlager, das aus einer Stahlstützschicht, einer darauf befindlichen Aluminium-Lagerlegierungsschicht und einer auf dieser abgeschiedenen Zink-Phosphat-Laufschicht besteht, ist zum Zwecke des Festsitzes im Lagergehäuse auf der Rückseite der Stahlstützschicht eine 0,5 bis 5 µm dicke metallische Schutzschicht vorgesehen.

EP 0 304 109 A2

Die Erfindung betrifft ein Verbundgleitlager für hochbelastete Triebwerke von Brennkraftmaschinen, insbesondere für aufgeladene Dieselmotoren, bestehend aus einer Stahlstützschicht, einer darauf aufgebrachten Aluminium-Lagerlegierungsschicht des Typs AlSi12CuMgNi, AlSn6Cu, AlZn5SiCuPb oder vorzugsweise AlZn4,5SiCuPb und einer auf der Lagerlegierungsschicht befindlichen 2 bis 8 $\mu$m dicken Zink-Phosphat-Laufschicht.

Bei diesem in der EP-PS 0 059 273 beschriebenen Verbundgleitlager ist die Zink-Phosphat-Laufschicht aufgrund ihrer sehr guten Anpassungsfähigkeit in der Lage, örtliche Lastspitzen abzubauen und damit gleichzeitig für eine gleichmäßige Verteilung der Belastung auf dem Gleitlagerwerkstoff zu sorgen. Dies ist besonders bei den harten und verschleißfesten Aluminium-Lagerlegierungen von Vorteil, da bei einer Serienfertigung geometrische Ungenauigkeiten, z.B. Fluchtungsfehler, nie ganz ausgeschlossen werden können. Die im Vergleich zur Aluminium-Lagerlegierungsschicht geringere Verschleißfestigkeit der Zink-Phosphat-Laufschicht begünstigt weiterhin den Einlaufvorgang.

Hergestellt wird die Zink-Phosphat-Laufschicht in der Weise, daß nach dem Reinigen des aus der Stahlstützschicht und der Aluminium-Lagerlegierungsschicht bestehenden Verbundgleitlagers das Auftragen der Zink-Phosphat-Laufschicht in einer aus primären Zink-Phosphaten in verdünnter Phosphorsäure bestehenden 60 bis 80° C warmen Lösung erfolgt und anschließend mit Wasser von einer Temperatur von 40 bis 60° C gespült wird. Es hat sich jedoch gezeigt, daß die außerhalb der Laufschicht des Verbundgleitlagers, d.h. die auf der Rückseite der Stahlstützschicht sowie den umlaufenden Kanten und ggf. den Lagerstößen vorhandene Zink-Phosphat-Schicht den Festsitz des Verbundgleitlagers im Lagergehäuse im Motorbetrieb beeinträchtigt, insbesondere da die auf der Rückseite der Stahlstützschicht befindliche Zink-Phosphat-Schicht mit einer Oberflächenrauheit $R_z$ von ungefähr 40 $\mu$m bei Belastungen Mikrobewegungen und damit einen erhöhten Verschleiß des Verbundgleitlagers verursachen kann.

Es ist die Aufgabe vorliegender Erfindung, ein Verbundgleitlager eingangs beschriebenen Aufbaus so auszubilden, daß ein Festsitz im Lagergehäuse unter allen Betriebsbedingungen der Brennkraftmaschine gewährleistet ist.

Diese Aufgabe ist dadurch gelöst, daß die außerhalb der Lauffläche des Verbundgleitlagers befindlichen Bereiche, wenigstens jedoch die Rückseite der Stahlstützschicht mit einer 0,5 bis 5 $\mu$m dicken Zinn-, Kadmium-, Kobalt-, Kupfer-, Zirkonium-, Blei-, Nickel-, Silber-, Titan-, Wolfram- oder Chrom-Schutzschicht versehen sind, die die Ausbildung einer Zink-Phosphat-Schicht außerhalb der Lauffläche des Verbundgleitlagers verhindert und eine bessere Anpassung des Verbundgleitlagers an das Lagergehäuse ermöglicht.

Die Herstellung der Schutzschicht erfolgt, indem nach der üblichen Reinigung des Verbundgleitlagers zunächst die Schutzschicht allseitig chemisch oder galvanisch abgeschieden, dann im Bereich der Lauffläche wieder abgetragen und dann einem 60 bis 80° C warmen Zink-Phosphat-Bad zugeführt und nach dem Abscheiden die Zink-Phosphat-Schicht auf der Lauffläche in einem 40 bis 60° C warmen Wasserbad gespült wird. Die Zink-Phosphat-Schicht kann nur im Bereich der Lauffläche abgeschieden werden, da die Schutzschicht in allen übrigen Bereichen die Ausbildung einer Zink-Phosphat-Schicht verhindert.

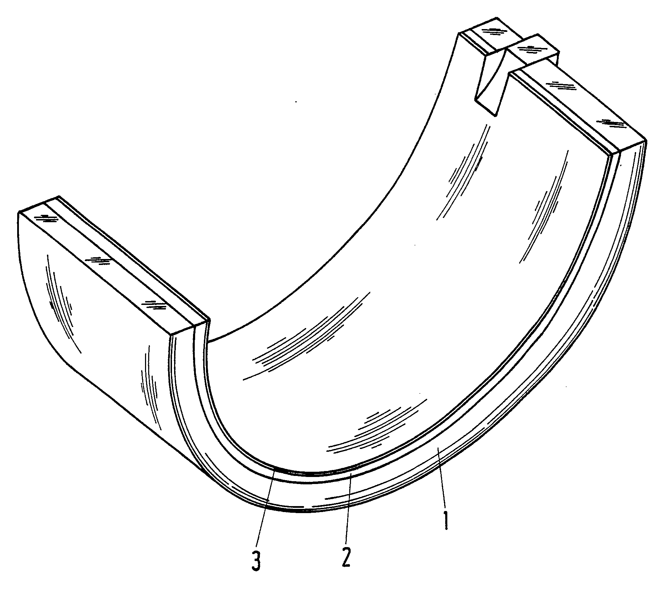

Die erfindungsgemäß beschichtete Gleitlagerschale besteht gemäß der Zeichnung aus einer Stahlstützschicht (1) und einer darauf aufgebrachten Aluminium-Lagerlegierungsschicht (2) des Typs AlZn4,5SiCuPb, auf der eine Zink-Phosphat-Schicht (3) aufgetragen ist, die eine gute Anpassungsmöglichkeit während des Einlaufvorgangs ermöglicht. Auf der Rückseite der Stahlstützschale (1) sowie auf den umlaufenden Kanten und den Stößen befindet sich eine - dunkel dargestellte -Zinn-Schutzschicht von 1 bis 3 $\mu$m Dicke, die den Festsitz der Gleitlagerschale unter allen Betriebsbedingungen gewährleistet.

## Ansprüche

1. Verbundgleitlager für hochbelastete Triebwerke von Brennkraftmaschinen, insbesondere für aufgeladene Dieselmotoren, bestehend aus einer Stahlstützschicht, einer darauf aufgebrachten Aluminium-Lagerlegierungsschicht des Typs AlSi12CuMgNi, AlSn6Cu, AlZn5SiCuPb oder vorzugsweise AlZn4,5SiCuPb und einer auf der Aluminium-Lagerlegierungsschicht abgeschiedenen 2 bis 8 $\mu$m dicken Zink-Phosphat-Laufschicht, dadurch gekennzeichnet, daß die außerhalb der Lauffläche befindlichen Bereiche, wenigstens jedoch die Rückseite der Stahlstützschicht mit einer 0,5 bis 5 $\mu$m dicken Zinn-, Kadmium-, Kobalt-, Kupfer-, Zirkonium-, Blei-, Nickel-, Silber-, Titan-, Wolfram- oder Chrom-Schutzschicht versehen sind.

2. Verfahren zur Herstellung des Verbundgleitlagers nach Anspruch 1, dadurch gekennzeichnet, daß nach dem üblichen Reinigen auf das Verbundgleitlager allseitig die Schutzschicht chemisch oder galvanisch abgeschieden, danach die Schutzschicht im Bereich der Lagerlauffläche wieder abgetragen, das Verbundgleitlager einem 60 bis 80° C warmen Zink-Phosphat-Bad zugeführt und nach erfolgter Beschichtung der Lagerlauffläche in einem 40 bis 60° C warmen Wasserbad gespült wird.

1

2

3